# EUROPEAN PATENT APPLICATION

(11) **EP 4 717 930 A1**
(43) Date of publication of application: **01.04.2026**
(21) Application number: 25190939.6
(22) Date of filing: 22.07.2025
(51) Int. Cl.: F16B 5/02

(54) **FASTENER ASSEMBLY WITH DEFORMABLE SLEEVE**

(30) Priority: 26.09.2024 US 202463699376 P
(71) Applicant: The Boeing Company, Arlington, VA 22202 (US)
(72) Inventor: ACHTNER, Gerfried R., Arlington, VA 22202 (US); NORMAN IV, Charles L., Arlington, VA 22202 (US)
(74) Representative: Hoffmann Eitle

(57) **Abstract**

A method of using a fastener assembly includes aligning a first opening having a first diameter in a first component with a second opening having a second diameter in a second component and inserting a shaft having an outer diameter surrounded by a sleeve through the first opening and the second opening. The sleeve includes a proximal end, a distal end, an inner diameter, and an outer diameter. The method also includes compressing the proximal end and distal end of the sleeve to deform the sleeve and increase a wall thickness of the sleeve within at least one of the first opening or the second opening.

## Description

### FIELD

The present disclosure relates generally to fastener assemblies and, more specifically, to fastener assemblies with sleeves.

### BACKGROUND

Fasteners are utilized to join at least two elements or components together in an assembly process. Full scale determinant assembly (FSDA) is an example assembly process that assembles components after they are at least partially machined to final size. The machining can include machining holes in multiple components for accepting fasteners. The machined holes in the components allow the components to be aligned relative to each other by aligning the holes, i.e., self-indexing. This approach can eliminate the need for additional fixtures and deburring of fastener holes created during drilling holes for fasteners after the components are initially aligned.

### DESCRIPTION OF THE DRAWINGS

Some embodiments of the present disclosure are now described, by way of example only, and with reference to the accompanying drawings. The same reference number represents the same element or the same type of element on all drawings.
FIG. 1 is a schematic illustration of an example fastener assembly for securing a first component and a second component.
FIG. 2 is a schematic illustration of the fastener assembly of FIG. 1 in an installed configuration.
FIG. 3 is a schematic illustration of a clamp compressing a sleeve within a first opening in the first component and a second opening in the second component.
FIG. 4 is a schematic illustration of a second fastener assembly for securing the first component to the second component.
FIG. 5 is an example flowchart of a method of securing the first component to the second component.

### SUMMARY

Disclosed herein is a method of using a fastener assembly. The method includes aligning a first opening having a first diameter in a first component with a second opening having a second diameter in a second component and inserting a shaft having an outer diameter surrounded by a sleeve through the first opening and the second opening. The sleeve includes a proximal end, a distal end, an inner diameter, and an outer diameter. The method also includes compressing the proximal end and distal end of the sleeve to deform the sleeve and increase a wall thickness of the sleeve within at least one of the first opening or the second opening.

In another aspect of the disclosure the first opening extends along a first longitudinal axis and the second opening extends along a second longitudinal axis offset from the first longitudinal axis.

In another aspect of the disclosure compressing the proximal end and the distal end to increase a wall thickness of the sleeve includes plastically deforming the sleeve.

In another aspect of the disclosure deforming the sleeve results in the wall thickness to vary circumferentially at a given axial location of the sleeve.

In another aspect of the disclosure deforming the sleeve results in a first axial location of the sleeve having a first circumferentially variable wall thickness and a second axial location of the sleeve having a second circumferentially variable wall thickness.

In another aspect of the disclosure the proximal end of the sleeve is compressed with a head of a bolt and the distal end of the sleeve is compressed with a nut.

In another aspect of the disclosure compressing the sleeve results in a portion of the sleeve deforming into a cavity at least partially defined by a washer and the nut.

In another aspect of the disclosure the cavity is at least partially defined by a radially outer wall that engages the nut.

In another aspect of the disclosure a protective washer in direct contact with the nut and the distal end of the sleeve.

In another aspect of the disclosure the shaft includes a pin on a clamp and the proximal end of the sleeve engaging a first portion of the clamp and the distal end of the sleeve engaging a piston.

In another aspect of the disclosure the method includes inserting a bolt into the sleeve after compressing and attaching a nut to a distal end of the bolt to securing the first component to the second component with a head of the bolt directly engaging the first component and the nut directly engaging the second component.

In another aspect of the disclosure the first opening is aligned with the second opening by self-indexing.

In another aspect of the disclosure inserting the sleeve through the first opening and the second opening includes forming a first radial gap between the outer diameter of the sleeve and an inner diameter of the first opening that varies circumferentially around the sleeve.

In another aspect of the disclosure inserting the sleeve through the second opening includes forming a second radial gap between the outer diameter of the sleeve and an inner diameter of the second opening with the second radial gap varying circumferentially around the sleeve and the second radial gap is offset from the first radial gap.

Disclosed herein is a fastener assembly. The assembly includes a sleeve having an inner diameter and an outer diameter and a bolt including a head at a proximal end and a shaft extending from the head. The shaft includes a threaded portion that is configured to fit within the inner diameter of the sleeve and the sleeve is configured to extend from a proximal end of the shaft at the head axially along at least 40% of the threaded portion of the shaft. The assembly also includes a nut having a shaft engagement surface and being configured to engage the shaft on the bolt.

In another aspect of the disclosure the sleeve is comprised of titanium.

In another aspect of the disclosure the assembly includes a washer having an inner diameter greater than the outer diameter of the sleeve with a recess at least partially defined by a radially outer wall configured to engage the nut and a protective washer configured to engage the sleeve and the nut.

Disclosed herein is an assembly. The assembly includes a first component having a first opening extending along a first longitudinal axis and a second component having a second opening extending along a second longitudinal axis. The first opening overlaps the second opening with the first longitudinal axis offset from the second longitudinal axis. A fastener assembly includes a sleeve having an inner diameter and an outer diameter defining a wall thickness with the wall thickness varying in a radial direction along at least one axial segment of the sleeve. The fastener assembly also includes a bolt including an outer diameter at least partially threaded and located within an inner diameter of the sleeve and a nut threadedly engaging the bolt.

In another aspect of the disclosure the fastener assembly includes a washer having an inner diameter greater than the outer diameter of the sleeve with a recess at least partially defined by a radially outer wall configured to engage the nut.

In another aspect of the disclosure the fastener assembly includes a protective washer separating the nut from contacting a distal end of the sleeve.

### DESCRIPTION

Embodiments of the present disclosure are described herein. It is to be understood, however, that the disclosed embodiments are illustrative examples, and that other embodiments can take various and alternative forms. The Figures are not necessarily drawn to scale and may be schematic. Some features may be exaggerated or minimized to show details of particular components. Therefore, specific structural and functional details disclosed herein are not to be interpreted as limiting, but merely as a representative basis for teaching one skilled in the art to variously employ the present disclosure.

When aligning holes between components by self-indexing existing machined holes in the components, some of the holes may not align perfectly due to machining tolerances. This can lead to the fasteners placed through the holes in the components becoming tilted or forming radial gaps between the component and the fastener. In some instances, the components may be sensitive to an occurrence of sparking caused by electromagnetic effects to which the components may be exposed. Such components, in particular, are ones that are exposed to the environment and could be exposed to unfavorable weather conditions, such as lightning. Those components that are exposed to lightning, for example, do not want to be subject to sparks induced by the electromagnetic effects. In the example of an aircraft, it is not desirable for the aircraft to experience sparking at fastener positions as a result of being exposed to these electromagnetic effects. One feature of this disclosure is to address sparking at fasteners locations and to improve fatigue life of the components at the location of fastening.

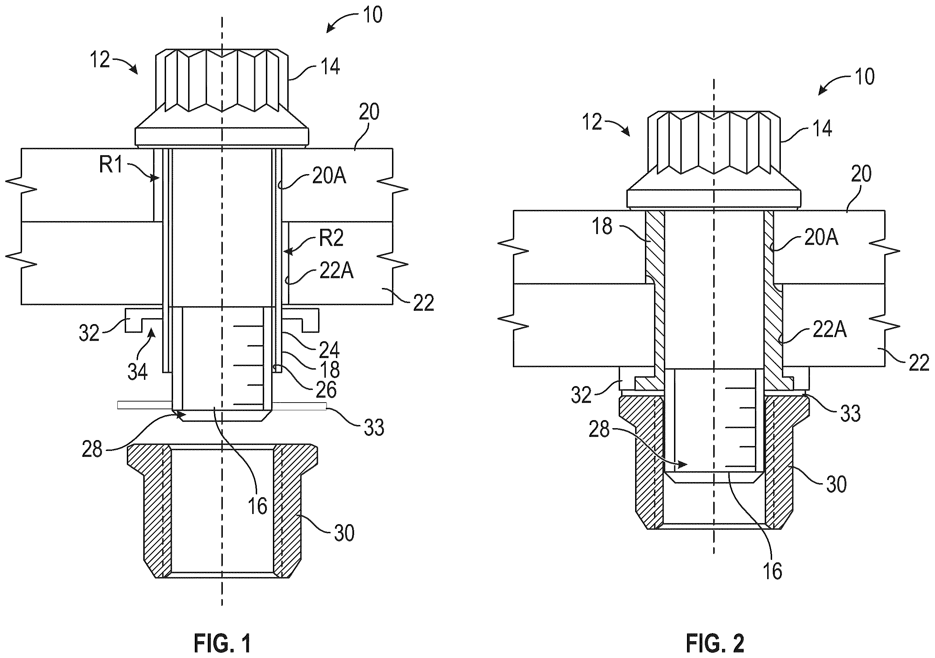

FIG. 1 illustrates an example fastener assembly 10. In the illustrated example, the fastener assembly 10 includes a bolt 12 having a head 14 and a shaft 16 extending from the head 14 along a longitudinal axis of the bolt 12. A sleeve 18 includes an inner surface 26 that surrounds and faces the shaft 16. Also, the sleeve 18 can include an outer surface 24 that faces a portion of a first component 20 defining a first opening 20A and a second component 22 defining a second opening 22A.

As shown in FIG. 1, a first radial gap R1 exists between the sleeve 18 and an inner surface of the first opening 20A. The first radial gap R1 can vary circumferentially around the sleeve 18. Similarly, a second radial gap R2 exists between the sleeve 18 and an inner surface of the second opening 22A. The second radial gap R2 can vary circumferentially around the sleeve 18. The variability of the first and second radial gaps R1 and R2 can be a result of machining tolerances for the first and second components 20 and 22, respectively. These machining tolerances can lead to at least one set of first and second openings 20A, 22A between to first and second components 20, 22 to have a first central longitudinal axis that is offset from a second central longitudinal axis, respectively. Therefore, a combination of the shaft 16 and sleeve 18 must be selected that will pass through a region of overlap between the first opening 20A and the second opening 22A due to their offset configuration. Accordingly, the shaft and sleeve combination chosen would have a smaller diameter than if the longitudinal axes between the two holes were aligned.

Due to the variability in the first and second radial gaps R1 and R2, the sleeve 18 in its undeformed shape will not fill the entire region of the radial gaps evenly. One feature of this disclosure is to reduce or eliminate the radial gap R1, R2 between the sleeve 18 and the first or second openings 20A and 22A by deforming the sleeve 18, such as through plastic deformation, to fill the radial gaps R1 and R2, respectively. The sleeve 18 can be comprised of a deformable metallic material, such as titanium or aluminum.

As shown in FIG. 2, a nut 30 engages threads adjacent a distal end 28 of the shaft 16 to apply a compressive force on the sleeve 18 in connection with the bolt 12. In particular, a proximal end of the sleeve 18 engages the head 14 of the bolt 12 and a distal end of the sleeve 18 engages the nut 30. As the nut 30 is tightened onto the bolt 12, the sleeve 18 deforms and fills the radial gaps R1 and R2 between the first and second components 20 and 22, respectively. By filling the radial gaps R1 and R2, a fatigue life the first and second components 20, 22 adjacent the first and second openings 20A, 22A, respectively, can improve. In one example, the sleeve 18 extends at least fifty percent of an axial length of the nut 30. In another example, the sleeve 18 extends along at least forty percent of an axial length of the threads on the shaft 16. Alternatively, a non-linear Finite Element Analysis Model can be used to predict a desired axial length of the sleeve 18.

Furthermore, a washer 32 can be placed around the outer diameter 24 of the sleeve 18 and in abutting contact with the second component 22. The washer 32 includes a recessed area 34 that faces a protective washer 33 and the nut 30 and at least partially defines a cavity for accepting a portion of the sleeve 18 that deformed while the nut 30 was tightened. One feature of the recessed area 34 in the washer 32 is to accommodate additional material from the sleeve 18 that is not needed to fill the first and second radial gaps R1 and R2. Additionally, the protective washer 33 can prevent the sleeve 18 from entering the threaded interface between the nut 30 and the shaft 16.

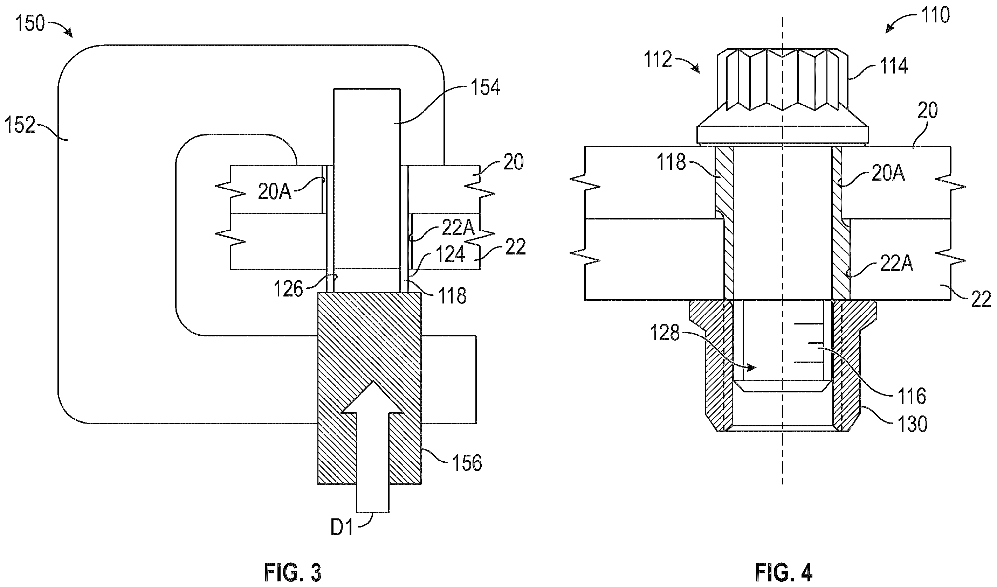

FIG. 4 illustrates another example fastener assembly 110. The fastener assembly 110 is similar to the fastener assembly 10 except where described below or shown in the drawings. Like or similar components will include the addition of a leading "1." One feature of the fastener assembly 110 when compared to the fastener assembly 10 is that a sleeve 118 in the fastener assembly 110 is compressed by a clamp 150 and not by the bolt 12 and nut 30 as with the fastener assembly 10.

As shown in FIG. 3, the clamp 150 includes a C-shaped body 152 having a pin 154 fixed relative to the C-shaped body 152. In the illustrated example, the pin 154 is surrounded by an inner surface 126 of the sleeve 118. The pin 154 and sleeve 118 are located within the first and second openings 20A and 22A in the first and second components 20, 22 with an outer surface 124 of the sleeve 118 facing the first and second components 20, 22. A piston 156 is used to apply a compressive force to the sleeve 118 similar to the nut 30 and bolt 12 with the fastener assembly 10. In particular, a proximal end of the sleeve 118 directly engages a portion of the clamp 150 and a distal end of the sleeve 118 directly engages the piston 156. The pin 154 includes an outer diameter that is greater than or equal to an outer diameter of a shaft 116 of a bolt 112 and less than a head 114 as shown in FIG. 4.

As shown in FIG. 3, the piston 156 is used to compress the sleeve 118 in order to plastically deform the sleeve 118 to fill the first and second radial gaps R1 and R2 between the sleeve 118 and the first and second components 20 and 22, respectively. Once the sleeve 118 has been deformed to fill the first and second radial gaps R1 and R2, the piston 156 is retracted and the clamp 150 is removed by sliding the pin 154 out of the sleeve 118 to provide an opening for the bolt 112. The bolt 112 can then be inserted into the opening within the sleeve 118 and the nut 130 can be tightened on a distal end 128 to a desired torque to secure the first and second components 20 and 22 together as shown in FIG. 4. When using the claim 150 as shown in FIG. 3, a washer, such as the washer 32, may be eliminated from the fastener assembly 110. However, a washer may be used in connection with the fastener assembly 110 in a similar manner as described above with respect to the fastener assembly 10.

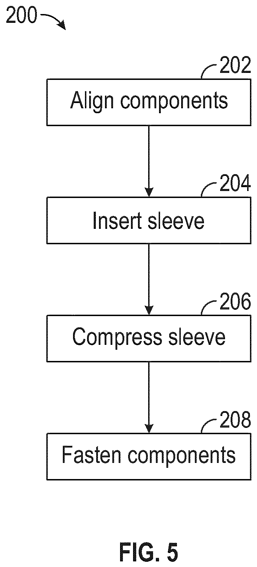

FIG. 5 illustrates an example method 200 of using the fastener assembly 10, 110. The method 200 begins at block 202 ("Align Components") by aligning the first component 20 relative to the second component 22. Aligning the first component 20 relative to the second component 22 includes aligning the first opening 20A and the second opening 22A relative to each other. The aligning may occur through self-indexing the first opening 20A in the first component 20 relative to the second opening 22A in the second component 22. Self-indexing can be used when the first and second components 20, 22 are machined with the first and second openings 20A, 22A as opposed to the first and second openings 20A, 22A being formed by drilling after the first and second components are aligned. Self-indexing the first and second components 20 and 22 can reduce assembly time as the components do not require drilling and deburring prior to inserting the fasteners. Once the components 20 and 22 are aligned, the method 200 proceeds to block 204.

At block 204 ("Insert Sleeve"), the sleeve 18, 118 is inserted through the first and second openings 20A, 22A in the first and second components 20, 22, respectively. For the fastener assembly 10, the sleeve 18 can be inserted through the first and second openings 20A, 22A while surrounding the shaft 16. Conversely, for the fastener assembly 110, the sleeve 118 is placed around the pin 154 on the clamp 150 to insert through the first and second openings 20A, 22A. As discussed above, because the first and second openings 20A and 22A machined prior to alignment and self-indexed as opposed to being drilled during the assembly process, the longitudinal axis of the first opening 20A may be offset from the longitudinal axis of the second opening 22A. This results in the first and second radial gaps R1 and R2 being variable in thickness between the sleeve and the first and second openings 20A, 22A, respectively. Once the sleeve is inserted, the method 200 then proceeds to block 206.

At block 206 ("Compress Sleeve"), the sleeve 18, 118 is compressed. Compression of the sleeve 18, 118 causes the sleeve material to plastically deform and fill in the first and second radial gaps R1, R2. For the example of the fastener assembly 10, the head 14 on the bolt 12 in connection with the nut 30 supply the compressive force to the sleeve 18 needed for deformation. Additionally, for the fastener assembly 10, a portion of the sleeve 18 deform into the recessed area 34 at least partially defined by the washer 32 and the nut 30. Once the sleeve 18 is compressed, the method 200 proceeds to block 208.

For the example of the fastener assembly 110, the clamp 150 is used to compress the sleeve 118 prior to inserting the bolt 112. In particular, the sleeve 118 is compressed between the C-shaped body 152 and the piston 156 by engaging opposing axial ends of the sleeve 118. The sleeve 118 then deforms to fill the radial gaps R1 and R2. The clamp 150 can then be removed from the sleeve 118 and the first and second components 20 and 22. Once the sleeve 118 is compressed, the method 200 proceeds to block 208.

At block 208 ("Fasten Components"), the first and second components 20 and 22 are fastened together. For the example fastener assembly 10, the first and second components 20 and 22 are fastened together while the sleeve 18 is being compressed by the bolt 12 and the nut 30. For the example fastener assembly 110, the shaft 116 on the bolt 112 can be inserted through and inner diameter of the sleeve 118 as deformed by the clamp 150 at block 206. The nut 130 can then be tightened on the shaft 116 of the bolt 112 to a desired torque to secure the first and second components 20 and 22 together. The example method 200 can then be completed.

The following Clauses provide example configurations of the aircraft fastener assemblies 10 and 110 and method 200 as shown in the FIGS.

Clause 1. A method of using a fastener assembly, comprising: aligning a first opening having a first diameter in a first component with a second opening having a second diameter in a second component; inserting a shaft having an outer diameter surrounded by a sleeve through the first opening and the second opening, wherein the sleeve includes a proximal end, a distal end, an inner diameter, and an outer diameter; and compressing the proximal end and distal end of the sleeve to deform the sleeve and increase a wall thickness of the sleeve within at least one of the first opening or the second opening.

Clause 2. The method of clause 1, wherein the first opening extends along a first longitudinal axis and the second opening extends along a second longitudinal axis offset from the first longitudinal axis.

Clause 3. The method of clauses 1-2, wherein compressing the proximal end and the distal end to increase a wall thickness of the sleeve includes plastically deforming the sleeve.

Clause 4. The method of clauses 1-3, wherein deforming the sleeve results in the wall thickness to vary circumferentially at a given axial location of the sleeve.

Clause 5. The method of clauses 1-4, wherein deforming the sleeve results in a first axial location of the sleeve having a first circumferentially variable wall thickness and a second axial location of the sleeve having a second circumferentially variable wall thickness.

Clause 6. The method of clauses 1-5, wherein the proximal end of the sleeve is compressed with a head of a bolt and the distal end of the sleeve is compressed with a nut.

Clause 7. The method of clauses 1-6, wherein compressing the sleeve results in a portion of the sleeve deforming into a cavity at least partially defined by a washer and the nut.

Clause 8. The method of clauses 1-7, wherein the cavity is at least partially defined by a radially outer wall that engages the nut.

Clause 9. The method of clauses 1-8, including a protective washer in direct contact with the nut and the distal end of the sleeve.

Clause 10. The method of clauses 1-9, wherein the shaft includes a pin on a clamp and the proximal end of the sleeve engaging a first portion of the clamp and the distal end of the sleeve engaging a piston.

Clause 11. The method of clauses 1-10, including inserting a bolt into the sleeve after compressing and attaching a nut to a distal end of the bolt to securing the first component to the second component with a head of the bolt directly engaging the first component and the nut directly engaging the second component.

Clause 12. The method of clauses 1-11, wherein the first opening is aligned with the second opening by self-indexing.

Clause 13. The method of clauses 1-12, wherein inserting the sleeve through the first opening and the second opening includes forming a first radial gap between the outer diameter of the sleeve and an inner diameter of the first opening that varies circumferentially around the sleeve.

Clause 14. The method of clauses 1-13, wherein inserting the sleeve through the second opening includes forming a second radial gap between the outer diameter of the sleeve and an inner diameter of the second opening with the second radial gap varying circumferentially around the sleeve and the second radial gap is offset from the first radial gap.

Clause 15. A fastener assembly, comprising: a sleeve having an inner diameter and an outer diameter; a bolt including a head at a proximal end and a shaft extending from the head, wherein the shaft includes a threaded portion that is configured to fit within the inner diameter of the sleeve and the sleeve is configured to extend from a proximal end of the shaft at the head axially along at least 40% of the threaded portion of the shaft; and a nut having a shaft engagement surface and being configured to engage the shaft on the bolt.

Clause 16. The fastener assembly of clause 15, wherein the sleeve is comprising of titanium.

Clause 17. The fastener assembly of clauses 15-16, including a washer having an inner diameter greater than the outer diameter of the sleeve with a recess at least partially defined by a radially outer wall configured to engage the nut and a protective washer configured to engage the sleeve and the nut.

Clause 18. An assembly comprising: a first component having a first opening extending along a first longitudinal axis; a second component having a second opening extending along a second longitudinal axis, wherein the first opening overlaps the second opening with the first longitudinal axis offset from the second longitudinal axis; a fastener assembly including: a sleeve having an inner diameter and an outer diameter defining a wall thickness, wherein the wall thickness varies in a radial direction along at least one axial segment of the sleeve; a bolt including an outer diameter at least partially threaded and located within an inner diameter of the sleeve; and a nut threadedly engaging the bolt.

Clause 19. The assembly of clause 18, wherein the fastener assembly includes a washer having an inner diameter greater than the outer diameter of the sleeve with a recess at least partially defined by a radially outer wall configured to engage the nut.

Clause 20. The assembly of clauses 18-19, including a protective washer separating the nut from contacting a distal end of the sleeve.

The terms "comprising," "including," and "having" are inclusive and therefore specify the presence of stated features, steps, operations, elements, or components, but do not preclude the presence or addition of one or more other features, steps, operations, elements, or components. Orders of steps, processes, and operations may be altered when possible, and additional or alternative steps may be employed. As used in this specification, the term "or" includes any combinations of the associated listed items. The term "any of" is understood to include any possible combination of referenced items, including "any one of" the referenced items. The term "any of" is understood to include any possible combination of referenced claims of the appended claims, including "any one of" the referenced claims.

For consistency and convenience, directional adjectives may be employed throughout this detailed description corresponding to the illustrated embodiments. Those having ordinary skill in the art will recognize that terms such as "above", "below", "upward", "downward", "top", "bottom", etc., may be used descriptively relative to the figures, without representing limitations on the scope of the invention, as defined by the claims.

## Claims

1. A method of using a fastener assembly (10), comprising:
aligning a first opening (20A) having a first diameter in a first component (20) with a second opening (22A) having a second diameter in a second component (22);
inserting a shaft (16) having an outer diameter (24) surrounded by a sleeve (18) through the first opening (20A) and the second opening (22A), wherein the sleeve (18) includes a proximal end, a distal end (28), an inner diameter, and an outer diameter (24); and
compressing the proximal end and distal end (28) of the sleeve (18) to deform the sleeve (18) and increase a wall thickness of the sleeve (18) within at least one of the first opening (20A) or the second opening (22A).

2. The method of claim 1, wherein the first opening (20A) extends along a first longitudinal axis and the second opening (22A) extends along a second longitudinal axis offset from the first longitudinal axis.

3. The method of claim 1 or 2, wherein compressing the proximal end and the distal end (28) to increase a wall thickness of the sleeve (18) includes plastically deforming the sleeve (18).

4. The method of any one of claims 1-3, wherein deforming the sleeve (18) results in the wall thickness to vary circumferentially at a given axial location of the sleeve (18), and/or wherein deforming the sleeve (18) results in a first axial location of the sleeve (18) having a first circumferentially variable wall thickness and a second axial location of the sleeve (18) having a second circumferentially variable wall thickness.

5. The method of any one of the preceding claims, wherein the proximal end of the sleeve (18) is compressed with a head (14) of a bolt (12) and the distal end (28) of the sleeve (18) is compressed with a nut (30).

6. The method of claim 5, wherein compressing the sleeve (18) results in a portion of the sleeve (18) deforming into a cavity at least partially defined by a washer (32) and the nut (30), optionally wherein the cavity is at least partially defined by a radially outer wall that engages the nut (30).

7. The method of claim 5 or 6, including a protective washer (33) in direct contact with the nut (30) and the distal end (28) of the sleeve (18).

8. The method of any one of the preceding claims, wherein the shaft (16) includes a pin (154) on a clamp (150) and the proximal end of the sleeve (18) engaging a first portion of the clamp (150) and the distal end (28) of the sleeve (18) engaging a piston (156), the method optionally including inserting a bolt (12) into the sleeve (18) after compressing and attaching a nut (30) to a distal end (28) of the bolt (12) to securing the first component (20) to the second component (22) with a head (14) of the bolt (12) directly engaging the first component (20) and the nut (30) directly engaging the second component (22).

9. The method of any one of the preceding claims, wherein the first opening (20A) is aligned with the second opening (22A) by self-indexing.

10. The method of any one of the preceding claims, wherein inserting the sleeve (18) through the first opening (20A) and the second opening (22A) includes forming a first radial gap (R1) between the outer diameter (24) of the sleeve (18) and an inner diameter of the first opening (20A) that varies circumferentially around the sleeve (18), optionally wherein inserting the sleeve (18) through the second opening (22A) includes forming a second radial gap (R2) between the outer diameter (24) of the sleeve (18) and an inner diameter of the second opening (22A) with the second radial gap (R2) varying circumferentially around the sleeve (18) and the second radial gap (R2) is offset from the first radial gap (R1).

11. A fastener assembly (10), comprising:
a sleeve (18) having an inner diameter and an outer diameter (24);
a bolt (12) including a head (14) at a proximal end and a shaft (16) extending from the head (14), wherein the shaft (16) includes a threaded portion that is configured to fit within the inner diameter of the sleeve (18) and the sleeve (18) is configured to extend from a proximal end of the shaft (16) at the head (14) axially along at least 40% of the threaded portion of the shaft (16); and
a nut (30) having a shaft engagement surface and being configured to engage the shaft (16) on the bolt (12).

12. The fastener assembly (10) of claim 11, wherein the sleeve (18) is comprising of titanium.

13. An assembly comprising:
a first component (20) having a first opening (20A) extending along a first longitudinal axis;
a second component (22) having a second opening (22A) extending along a second longitudinal axis, wherein the first opening (20A) overlaps the second opening (22A) with the first longitudinal axis offset from the second longitudinal axis;
a fastener assembly (10) including:
a sleeve (18) having an inner diameter and an outer diameter (24) defining a wall thickness, wherein the wall thickness varies in a radial direction along at least one axial segment of the sleeve (18);
a bolt (12) including an outer diameter (24) at least partially threaded and located within an inner diameter of the sleeve (18); and
a nut (30) threadedly engaging the bolt (12).

14. The fastener assembly (10) of claim 11 or 12 or the assembly of claim 13, wherein the fastener assembly (10) includes a washer (32) having an inner diameter greater than the outer diameter (24) of the sleeve (18) with a recess at least partially defined by a radially outer wall configured to engage the nut (30).

15. The fastener assembly (10) of claim 11 or 12 or the assembly of claim 13 or 14, including a protective washer (33) separating the nut (30) from contacting a distal end (28) of the sleeve (18).
